(19) Europäisches Patentamt
European Patent Office
Office européen des brevets

(11) EP 2 425 944 A1

# (12) EUROPÄISCHE PATENTANMELDUNG

(43) Veröffentlichungstag:
**07.03.2012 Patentblatt 2012/10**

(51) Int Cl.:
***B27K 3/34*** *(2006.01)* ***C09K 21/12*** *(2006.01)*

(21) Anmeldenummer: **10175606.2**

(22) Anmeldetag: **07.09.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **LANXESS Deutschland GmbH**
**51369 Leverkusen (DE)**

(72) Erfinder:
- **Hansel, Jan-Gerd**
  **51469 Bergisch-Gladbach (DE)**
- **Tebbe, Heiko**
  **41539 Dormagen (DE)**

## (54) Flammwidrige Holzwerkstoffe

(57) Die vorliegende Erfindung betrifft mit halogenfreien organischen Phosphorverbindungen flammwidrig ausgerüstete Holzwerkstoffe, Mittel und Verfahren zu ihrer Herstellung, sowie ihre Verwendung.

EP 2 425 944 A1

## Beschreibung

Die vorliegende Erfindung betrifft mit halogenfreien organischen Phosphorverbindungen flammwidrig ausgerüstete Holzwerkstoffe, Mittel und Verfahren zu ihrer Herstellung sowie ihre Verwendung.

Holz und Holzwerkstoffe müssen wie auch andere Baustoffe, Bauteile und Materialien umfangreichen Anforderungen in Bezug auf den Flammschutz gerecht werden. So können z.B. Baustoffe gemäß DIN 4102, Bauteile für Elektrogeräte gemäß UL 94 oder IEC-60695-2, Bauteile für Schienenfahrzeuge gemäß DIN 5510 und Möbel gemäß BS 5852 klassifiziert und für ihre Anwendung entsprechend flammwidrig ausgerüstet werden. Besondere Anforderungen werden z.B. an Holzwerkstoffe zur Ausrüstung von Luftfahrzeugen (z.B. FAR 25.853) oder Schiffen (z.B. IMO A.652 (16)) gestellt. Eine Übersicht über zahlreiche Prüfungen und Anforderungen gibt z.B. Jürgen Troitzsch, "Plastics Flammability Handbook", 2004, Carl Hanser Verlag, München.

Zusätzlich steigen die Anforderungen an den Brandschutz mehr und mehr. So stellen z.B. neue europäische Normen, die die bisherigen nationalen Prüfnormen ablösen sollen, deutlich höhere Anforderungen an den Brandschutz. Der SBI-Test (EN 13823) verlangt beispielsweise nicht nur eine Berücksichtigung des Brandverhaltens, sondern auch der Rauchgasdichte. Die neue, für Schienenfahrzeuge vorgesehene Norm (prEN 45545) berücksichtigt beispielsweise Rauchgasdichte und Rauchgastoxizität. Anforderungen an die Rauchgastoxizität, die vielfach über die Messung u. a. der Halogenwasserstoffkonzentrationen im Rauchgas bestimmt wird, können z.B. den Einsatz bewährter halogenhaltiger Flammschutzmittel unmöglich machen. Daneben werden halogenfreie Flammschutzmittel auch bevorzugt, weil ihnen in Hinblick auf Produktsicherheit und Umweltschutz durch die Öffentlichkeit mehr Vertrauen entgegengebracht wird. Das heißt, für viele Anwendungsgebiete von Holzwerkstoffen muss eine bewährte und funktionierende Flammschutzausrüstung hinsichtlich neuer Anforderungen überarbeitet werden.

Die Flammschutzausrüstung von Holzwerkstoffen durch Behandlung mit Chemikalien ist bekannt. Die wichtigsten Behandlungsmethoden sind die Kesseldruckimprägnierung und die Beschichtung. Eine flammwidrige Beschichtung von Holz hat den erheblichen Nachteil, dass das natürliche Material Holz im Baubereich oder als Möbelwerkstoff sein typisches natürliches Aussehen verliert. Selbst wenn die Beschichtung durchsichtig ist, werden das Erscheinungsbild der Holzoberfläche und die Weiterverarbeitungsmöglichkeiten beeinträchtig, was unerwünscht sein kann. Häufiger wird daher die Kesseldruckimprägnierung angewendet, bei der das Holz mit einer meist wässrigen Lösung eines Flammschutzmittels in Kontakt gebracht wird, durch geeignete Maßnahmen die Aufnahme einer ausreichenden Menge Flammschutzmittel in das Volumen des Holzes erreicht wird und schließlich getrocknet wird. Als Flammschutzmittel werden überwiegend phosphor-, stickstoff und borhaltige Substanzen eingesetzt. Beispiele hierfür sind Ammoniumphosphat, Harnstoff oder Natriumtetraborat.

Die flammwidrige Ausrüstung von Holz durch Kesseldruckimprägnierung mit salzartigen Flammschutzmitteln ist technisch etabliert und kostengünstig, hat aber eine Reihe von Nachteilen. Bei direkter Wassereinwirkung, z.B. an der Außenhaut von Gebäuden, werden die Flammschutzmittel herausgelöst und die Flammwidrigkeit lässt nach. Aus diesem Grund werden insbesondere für Außenanwendungen Flammschutzmittel eingesetzt, die im Holz fixiert sind und nicht durch Wasser ausgelaugt werden können. Beispiele hierfür sind Kombinationen aus Flammschutzmitteln mit einem Harz, das nach der Imprägnierung im Holz auspolymerisiert wird und das Flammschutzmittel dabei bindet, wie in US-A 3,968,276 beschrieben. Alternativ können, wie aus US-A 3,558,596 bekannt ist, reaktive Flammschutzmittel in das Holz eingebracht werden, die durch Reaktion mit dem Holz fixiert werden.

Doch auch wenn kein direkter Wasserkontakt zu befürchten ist, z.B. im Gebäudeinnenbereich, ist bei der Anwendung herkömmlicher Flammschutzmittel damit zu rechnen, dass das Holz hygroskopisch wird, das heißt, dass der Gleichgewichts-Feuchtigkeitsgehalt erhöht wird. Daraus können eine schlechtere Dimensionsstabilität der Holzbauteile, Korrosion an Nägeln, Schrauben und Beschlägen sowie eine höhere Anfälligkeit gegenüber mikrobiellem Angriff resultieren. So ist aus Fire and Materials 2001, 25, 9 5 - 104 bekannt, dass Flammschutzmittel auf Basis von Diammoniumhydrogenphosphat oder Harnstoff aufgrund ihrer Hygroskopie und zusätzlich wegen ihrer Nährstoffwirkung einen Befall mit holzzersetzenden Schimmelpilzen fördern können.

Weiterhin kann eine flammwidrige Ausrüstung des Holzes Nachteile in der Haltbarkeit, Leimhaftung und Lackierbarkeit des Holzes mit sich bringen. Beispielsweise können reaktive Klebe- oder Lacksysteme auf Basis von Polyurethanen nicht oder nur unzureichend ausreagieren, wenn der pH-Wert des Substrates durch das Flammschutzmittel verändert wurde. Ebenso kann sich die mechanische Stabilität durch eine flammwidrige Ausrüstung verschlechtern.

Um hohen Brandschutzforderungen bei niedriger Einsatzmenge gerecht zu werden, wurden halogenhaltige Flammschutzmittel für Holz vorgeschlagen, z.B. Halogenphosphonate in US-A 2,725,311 und Halogenphosphite und Halogenphosphate in US-A 3,285,774. Der Halogengehalt bringt eine gute Wirksamkeit mit sich. Nachteilig an diesen Substanzen sind die hohen Rauchgasdichten und Rauchgastoxizitäten im Brandfall. Darüber hinaus werden halogenhaltige Flammschutzmittel den Anforderungen der Gesellschaft an Produktsicherheit und Umweltschutz nicht mehr gerecht.

Salzartige Flammschutzmittel auf Basis von Ammoniumsalzen der Phosphorsäure, der Polyphosphorsäuren oder von substituierten Phosphonsäuren werden häufig zur flammwidrigen Ausrüstung von Holz eingesetzt. Sie haben

den Nachteil, dass sie die Beschaffenheit und das Aussehen der Holzoberfläche unerwünscht verändern können, z.B. durch kristalline Salzablagerungen, zu denen es bei wechselnder Luftfeuchtigkeit kommen kann, oder durch Verfärbungen.

Borverbindungen wie Natriumtetraborat werden derzeit ebenfalls als Flammschutzmittel für Holz eingesetzt. Ihrem Nutzen steht jedoch ein Gefährdungspotential gegenüber, da sie gemäß aktueller EU-Verordnung als reproduktionstoxisch eingestuft werden (siehe Verordnng (EG) Nr. 790/2009, S. 126). Nachdem die europäische Chemikalien-Agentur ECHA eine Reihe von Borverbindungen auf die Liste "Candidate List of Substances of Very High Concern (SVHC)" setzte (ECHA-Pressemitteilung ECHA/PR/10/12 vom 18. Juni 2010), könnte ihre zukünftige Verwendung durch eine Authorisierungspflicht erheblich eingeschränkt werden.

Die strengen und zunehmenden normativen Anforderungen, die sich wandelnde Akzeptanz bestimmter Chemikalien durch die Öffentlichkeit und die beschriebenen Nachteile der bekannten Flammschutzausrüstungen für Holzwerkstoffe führen zu einem Bedarf an neuen Lösungen zur Herstellung von flammwidrigen Holzwerkstoffen. Die Aufgabe der vorliegenden Erfindung bestand darin, Mittel und Verfahren zur Herstellung von flammwidrigen Holzwerkstoffen zu finden, welche auf Basis von gut in technischem Maßstab verfügbaren Stoffen in einer einstufigen Behandlung eine hohe Wirksamkeit zeigen. Die gesuchten Mittel sollten frei von halogenhaltigen Stoffen, anorganischen Phosphaten und Borverbindungen sein. Sie sollten eine geringe Flüchtigkeit aufweisen und die Wasseraufnahme des Holzes möglichst wenig erhöhen. Das natürliches Aussehen des Holzes sollten nicht beeinträchtigt werden.

Überraschend hat sich gezeigt, dass Tetraalkylbisphosphate in einfacher Weise die Herstellung von flammwidrigen Holzwerkstoffen erlauben, die alle Anforderungen erfüllen. Gegenstand dieser Erfindung sind flammwidrige Holzwerkstoffe enthaltend als Flammschutzmittel wenigstens ein Tetraalkylbisphosphat der Formel (I)

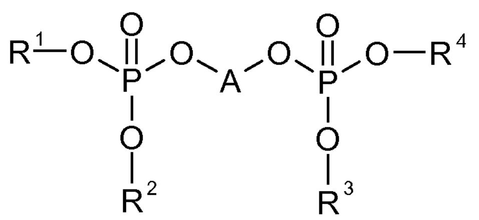

(I),

worin

$R^1$, $R^2$, $R^3$, $R^4$ unabhängig voneinander für einen Rest $C_1$- bis Cs-Alkyl oder $C_1$- bis $C_4$-Alkoxyethyl stehen,

A für einen geradkettigen, verzweigten und/oder cyclischen $C_4$- bis $C_{zo}$-Alkylenrest, eine Gruppierung $-CH_2-CH=CH-CH_2-$, eine Gruppierung $-CH_z-C---C-CH_z-$, eine Gruppierung $-CHR^5-CHR^6-(O-CHR^7-CHR^8)_{a-}$, worin a eine Zahl von 1 bis 5 ist, eine Gruppierung $-CHR^S-CHR^6-S(O)_b-CHR'-CHR^g-$, worin b eine Zahl von 0 bis 2 ist, oder eine Gruppierung $-(CHR^5-CHR^6)_c-O-R^9-O-(CHR^7-CHR^s)_r$, worin c und d unabhängig voneinander Zahlen von 1 bis 5 sind, steht,

$R^5$, $R^6$, $R^7$, $R^8$ unabhängig von einander für H oder Methyl stehen,

$R^9$ für eine Gruppierung $-CH_2-CH=CH-CH_2-$, eine Gruppierung -CHz-C---C-CHz-, ein 1,2-Phenylenrest, ein 1,3-Phenylenrest, ein 1,4-Phenylenrest, einen Rest der allgemeinen Formel (II),

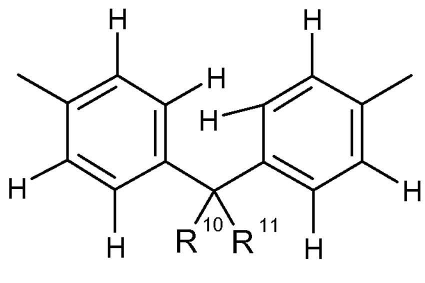

(II),

einen Rest der allgemeinen Formel (III),

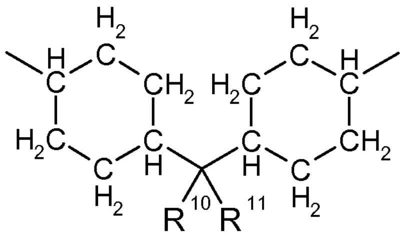

(III),

einen Rest der allgemeinen Formel (IV),

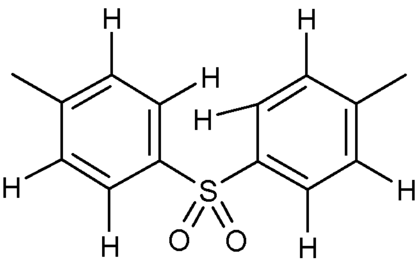

(IV),

oder für einen Rest der Formel -C(=O)-$R^{12}$-C(=O)- steht,

R 10 und $R^{11}$ unabhängig voneinander für H oder $C_1$- bis $C_4$-Alkyl oder $R^{10}$ und $R^{11}$ zusammen für einen optional alkylsubstituierten Ring mit 4 bis 8 C-Atomen stehen und

$R^{12}$ für einen geradkettigen, verzweigten und/oder cyclischen $C_2$- bis $C_s$-Alkylenrest, einen 1,2-Phenylenrest, einen 1,3-Phenylenrest, oder einen 1,4-Phenylenrest steht.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.
Bevorzugt sind $R^I$, R 2, $R^3$ und $R^4$ gleich und stehen für einen Rest der Reihe Ethyl, n-Propyl, iso-Propyl, n-Butyl oder n-Butoxyethyl.
Bevorzugt steht A für einen geradkettigen $C_4$- bis $C_6$-Alkylenrest oder für eine Gruppierung der allgemeinen Formel (III), worin $R^{I0}$ und $R^{II}$ gleich sind und Methyl bedeuten, oder für eine Gruppierung der Formeln (V), (VI) oder (VII),

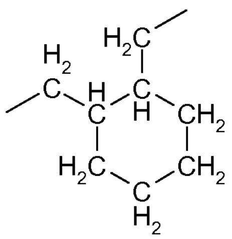

(V)

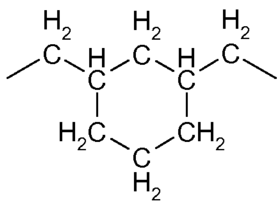

(VI)

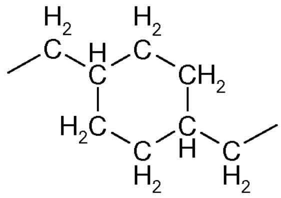 (VII),

oder bevorzugt steht A für eine Gruppierung $-CHR^5-CHR^6-(O-CHR^7-CHR^s)_{a-}$, worin a eine Zahl von 1 bis 2 ist und $R^5$, $R^6$, $R^7$ und $R^8$ gleich sind und H bedeuten oder bevorzugt steht A für eine Gruppierung $-(CHR^5-CHR^6)_c-O-R^9-O-(CHR^7-CHR^8)_d$, worin c und d unabhängig voneinander eine Zahl von 1 bis 2 sind und $R^9$ eine Gruppierung der allgemeinen Formel (II) und $R^{10}$ und $R^{II}$ gleich sind und Methyl bedeuten.

Besonders bevorzugt betrifft die vorliegende Erfindung flammwidrige Holzwerkstoffe enthaltend als Flammschutzmittel wenigstens ein Tetraalkylbisphosphat aus der Gruppe Diethylenglykol-bis(di-n-butylphosphat) = Formel (VIII), Diethylenglykol-bis(di-n-propylphosphat) = Formel (IX), Diethylenglykol-bis(diethylphosphat) = Formel (X), 1 ,4-Butandiol-bis( di-n-propylphosphat) = Formel (XI) oder 1,4-Cyclohexandimethanol-bis(diethylphosphat) = Formel (XII).

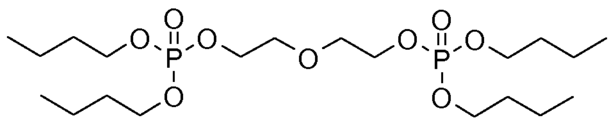 (VIII)

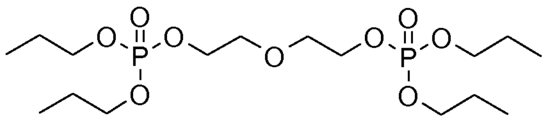 (IX)

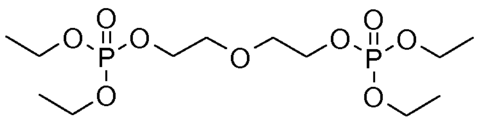 (X)

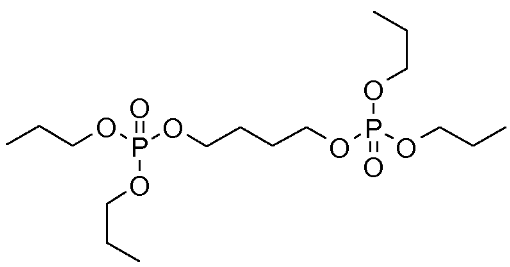 (XI)

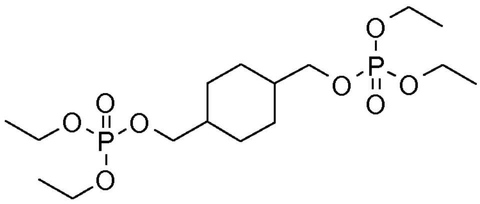

(XII)

Besonders bevorzugt handelt es sich bei den Tetraalkylbisphosphaten der allgemeinen Formel (I) um bei Temperaturen von 20 bis 80 °C flüssige Verbindungen. Ganz besonders bevorzugt lassen sich die Tetraalkylbisphosphate der Formel (I) in Wasser oder einem anderen Lösungsmittel lösen oder dispergieren.

Insbesondere bevorzugt weisen die Tetraalkylbisphosphate der Formel (I) einen Siedepunkt von größer als 200 °C bei 1013 mbar auf.

Als flammwidrige auszurüstende Holzwerkstoffe werden in Zusammenhang mit der vorliegenden Erfindung aus massivem Holz bestehende Zuschnitte, wie beispielsweise entrindete Stämme, Bretter, Balken, Leisten, Platten, Schichten, Furniere, Pfosten oder Stäbe, weiterhin Holzpartikel, wie beispielsweise Späne, Häcksel, Holzwolle, Sägemehl oder Holzfasern, und schließlich aus Holzzuschnitten oder Holzpartikeln hergestellte Materialien oder Halbzeuge, wie beispielsweise Sperrholz, Schichtholz, Laminate, Spanplatten und Holzfaserplatten, verstanden.

Für die Herstellung der erfindungsgemäß flammwidrig auszurüstenden Holzwerkstoffe kann Lauboder Nadelholz eingesetzt werden. Geeignet sind insbesondere die Holzarten Abachi, Ahorn, Birke, Birne, Bubinga, Buche, Douglasie, Ebenholz, Eibe, Eiche, Esche, Erle, Eucalyptus, Fichte, Gabun, Kastanie, Kiefer, Kirsche, Lärche, Linde, Mahagoni, Merbau, Meranti, Nussbaum, Palisander, Pappel, Platane, Robinie, Tanne, Teak, Ulme, Weide, Wenge und Zeder sowie die jeweiligen Unterarten und lokalen Varietäten. Geeignet sind im weiteren Sinne auch holzige und faserige Bestandteile anderer Pflanzen, wie beispielsweise Bambus, Sisal und Hanf.

Die erfindungsgemäß flammwidrig auszurüstenden Holzwerkstoffe können auch eine beliebige Mischung der genannten Bisphosphate enthalten. Die Tetraalkylbisphosphate können nach bekannten Methoden hergestellt werden. Dabei kommen im industriellen Maßstab verfügbare Ausgangsmaterialien zum Einsatz, die die gewünschten Endprodukte einfach herzustellen erlauben. Die Tetraalkylbisphosphate sind erfindungsgemäß halogenfrei, das heißt, sie enthalten keine gebundenen F-, Cl-, Br- oder 1-Atome. Allerdings können sie bei ihrer industriellen Herstellung mit halogenhaltigen Verunreinigungen kontaminiert sein, die einen Halogengehalt von weniger als 0,5 Gew.-% verursachen.

Die Herstellung der Verbindung (VIII) Diethylenglykol-bis(di-n-butylphosphat), Molgewicht 491 1 g/mol, Siedepunkt (1013 mbar): > 200 °C, CAS Reg.-No. 62955-03-7, aus Diethylenglykol, Phosphoroxychlorid und n-Butanol ist in US-A 4,056,480, Beispiele 1 und 2, Sp. 7, Z. 4 - 38, beschrieben.

Die Herstellung der Verbindung der F ormel (IX) Diethylenglykol-bis(di-n-propylphosphat), Molgewicht 434 g/mol, Siedepunkt (1013 mbar): > 200 °C, CAS Reg.-No. 109598-81-4, aus Diethylenglykol, Phosphortrichlorid, Chlor und n-Propanol ist in US-A 2,782,128, Beispiel 1, Sp. 2, Z. 47 - Sp. 3, Z. 21, beschrieben.

Die Verbindung der Formel (X) Diethylenglykol-bis(diethylphosphat), Molgewicht 378 g/mol, Siedepunkt (1013 mbar): > 200 °C, CAS Reg.-No. 500347-73-9, lässt sich nach dem in US-A 4,056,480 angegebenen Verfahren zur Herstellung der Verbindung (VIII) unter Verwendung von Diethylenglykol, Phosphoroxychlorid und Ethanol herstellen.

Die Herstellung der Verbindung der Formel (XI) 1,4-Butandiol-bis(di-n-propylphosphat), Molgewicht 418 g/mol, Siedepunkt (1013 mbar): > 200 °C, CAS Reg.-No. 109441-43-2, aus 1,4-Butandiol, Phosphortrichlorid, Chlor und n-Propanol ist in US-A 2,782,128, Beispiel 3, Sp. 3, Z. 35 - Sp. 4, Z. 3, beschrieben.

Die Verbindung der Formel (XII) 1,4-Cyclohexandimethanol-bis(diethylphosphat), Molgewicht 416 6 g/mol, Siedepunkt (1013 mbar): > 200 °C, lässt sich nach dem in US-A 4,056,480, Sp. 8, Z. 5 - 39, angegebenen Verfahren zur Herstellung von 1,4-Cyclohexandimethanol-bis(di-n-butylphosphat), CAS Reg.-No. 62955-05-9, unter Verwendung von 1,4-Cyclohexandimethanol, Phosphoroxychlorid und Ethanol herstellen.

Die erfindungsgemäß flammwidrig auszurüstenden Holzwerkstoffe können neben den Tetraalkylbisphosphaten der Formel (I) weitere für diesen Zweck übliche Flammschutzmittel enthalten. Bevorzugt sind hierfür Salze der Phosphorsäure mit stickstoffhaltigen Kationen, insbesondere Ammoniumphosphat, Salze der Di- oder Polyphosphorsäure mit stickstoffhaltigen Kationen, insbesondere Ammoniumpolyphosphat, Salze substituierter Phosphonsäuren, insbesondere 2-Phosphonobutan-1,2,4-tricarbonsäure-tetraammoniumsalz, hydroxyfunktionelle Ester organischer Phosphonsäuren, insbesondere 3-(Dimethylphosphono)-N-(hydroxymethyl)propionamid, Borverbindungen, insbesondere Natriumtetraborat, Stickstoffverbindungen, insbesondere Harnstoff, Melamin und Guanidinderivate oder Siliziumverbindungen, insbesondere Silicone.

Die erfindungsgemäß flammwidrig auszurüstenden Holzwerkstoffe werden hergestellt, indem optional vorbehandeltes Holz in Form von Zuschnitten, Holzpartikeln oder Holzhalbzeugen mit den genannten Tetraalkylbisphosphaten

der Formel (I) in an sich bekannter Weise behandelt werden.

Gegenstand der Erfindung sind auch Mittel zur Herstellung von flammwidrigen Holzwerkstoffen, dadurch gekennzeichnet, dass diese Mittel Tetraalkylbisphosphate gemäß der Formel (I) enthalten.

In einer bevorzugten Ausführungsform der Erfindung handelt es sich bei den Mitteln um Lösungen oder Dispersionen der Tetraalkylbisphosphate der Formel (I) in einem Lösungs- bzw. Dispersionsmittel. Als Lösungs- bzw. Dispersionsmittel werden Wasser, organische Lösungsmittel oder Mischungen aus Wasser und organischen Lösungsmitteln verwendet. Besonders bevorzugt ist die Verwendung von Wasser als Lösungs- bzw. Dispersionsmittel. Die Lösungen oder Dispersionen und somit die erfindungsgemäßen Mittel enthalten die Tetraalkylbisphosphate in Konzentrationen von 0,1 bis 80 Gew.-%, bezogen auf die Lösung oder Dispersion, bevorzugt von 1 bis 40 Gew.-%. Die Lösungen oder Dispersionen und somit die erfindungsgemäßen Mittel haben einen pH-Wert von 1 bis 12, bevorzugt von 2 bis 10. Die Lösungen oder Dispersionen und somit die erfindungsgemäßen Mittel können weitere Zusätze enthalten, bevorzugt Mittel zur Einstellung oder Regulierung des pH-Werts, antimikrobielle Holzschutzmittel, Benetzungshilfsmittel oder Dispergiermittel.

Gegenstand der Erfindung ist auch ein Verfahren zur flammwidrigen Ausrüstung von Holzwerkstoffen, dadurch gekennzeichnet, dass Holzzuschnitte, Holzpartikel oder Holzhalbzeuge mit Tetraalkylbisphosphaten gemäß der Formel (I) behandelt werden.

In einer bevorzugten Ausführungsform der Erfindung werden bei der Behandlung die oben beschriebenen Lösungen oder Dispersionen der genannten Tetraalkylbisphosphate in Wasser oder wasserhaltigen Lösungsmitteln durch Sprühen, Streichen, Tauchen und Kesseldruckimprägnierung, oder durch Kombinationen solcher Verfahren, in den Holzwerkstoff eingebracht. Im Gegensatz zu den aus dem Stand der Technik bekannten Verfahren der oberflächlichen Beschichtung mit einem Flammschutzmittel werden also bei dieser bevorzugten Ausführungsform der Erfindung die Tetraalkylbisphosphate in das Volumen des Holzes eingebracht. Dies bringt den Vorteil mit sich, dass eine Bearbeitung des Holzes (z.B. Sägen oder Abschleifen) keinen Verlust an Flammwidrigkeit mit sich bringt. Besonders bevorzugt wird die Behandlung als Kesseldruckimprägnierung durchgeführt.

Die Behandlung kann drucklos, bei Unterdruck bis zu 0,001 bar oder bei Überdruck bis zu 50 bar durchgeführt werden. Sie wird bei Temperaturen von 0 bis 150 °C durchgeführt. Die bekannten Varianten der Imprägnierung, namentlich das Kesseldruckverfahren, das Niederdruckverfahren, das Diffusionsverfahren oder die Trogtränkung können angewendet werden. Die Imprägnierung kann eine anschließende Trocknung des Holzwerkstoffs beinhalten.

Die im erfindungsgemäßen Verfahren eingesetzten Holzzuschnitte, Holzpartikel oder Holzhalbzeuge können saftfrisch oder vorgetrocknet behandelt werden. Sie können in verschiedener Weise vorbehandelt sein, beispielsweise durch Darren, Beizen, Bleichen, Auswaschen von Holzbestandteilen oder antimikrobielle Behandlung.

Die erfindungsgemäß behandelten Holzzuschnitte, Holzpartikel oder Holzhalbzeuge können in anschließenden Bearbeitungsschritten weiter modifiziert werden, um Gebrauchseigenschaften wie Unempfindlichkeit gegen Wasser, Wetter und UV-Strahlen, Resistenz gegen Mikroben und Insekten, Flammwidrigkeit, Dimensionsstabilität oder mechanische Stabilität zu verbessern. Für diese Zwecke können sie nach an sich bekannten Methoden beölt, lackiert, beschichtet, thermisch behandelt, acetyliert, silanisiert oder furfuryliert werden.

Die erfindungsgemäßen beziehungsweise durch erfindungsgemäße Mittel und Verfahren hergestellten Holzwerkstoffe unterscheiden sich in Aussehen und Eigenschaften nicht von unbehandelten Holzwerkstoffen und lassen sich sehr gut weiter verarbeiten. Durch die bei der Behandlung eingesetzten Tetraalkylbisphosphate wird eine hohe Flammwidrigkeit erreicht.

Die Erfindung betrifft schließlich auch die Verwendung der beschriebenen Holzwerkstoffe als Bauholz bevorzugt im Innenbereich, besonders bevorzugt im Dachstuhl, in Decken- und Wandkonstruktionen, als Material zur Herstellung von Inneneinrichtungen, bevorzugt als Decken-oder Wandverkleidung oder Fußbodenbelag, als Material zur Herstellung von Möbeln, Einbauschränken, Messeständen und Ladeneinrichtungen sowie als Material zur dekorativen Innenausstattung von Transportmitteln, bevorzugt Automobilen, Eisenbahnwaggons, Flugzeugen und Schiffen, als Ausgangsmaterial für weiter veredelte Holzhalbzeuge, bevorzugt Spanplatten und Holzfaserplatten, und als Füllstoff oder Verstärkungsmaterial in holzhaltigen Kompositmaterialien, bevorzugt Holz-Kunststoff-Komposite oder mineralisch gebundene Baumaterialien.

Anhand der nachfolgenden Beispiele wird die Erfindung näher erläutert, ohne dass dadurch eine Einschränkung der Erfindung bewirkt werden soll. Die Prozente bedeuten Gewichtsprozente.

## Beispiele

### A. Flammwidrigkeit

**Tabelle 1.** Verwendete Flammschutzmittel.

| **Beispiel** | Flammschutzmittel | Konzentration [%] der wässrigen Lösung |
|---|---|---|
| **V 1** | kein | 0 |
| **V 2** | 2-Phosphonobutan-1,2,4-tricarbonsäuretetranatriumsalz | 15 |
| **V 3** | Diammoniumhydrogenphosphat | 15 |
| **B 1** | Diethylenglykol-bis(diethylphosphat) | 15 |

Herstellung der Prüfkörper

Für die Brandprüfung wurden Prüfkörper aus Kiefernholz (125 mm x 40 mm x 4 mm) eingesetzt, die aus handelsüblichen Latten durch Absägen hergestellt wurden. Die Prüfkörper wurden vor der Behandlung mit den Flammschutzmitteln 2 Tage bei 23 °C und 50 % Luftfeuchtigkeit klimatisiert. Anschließend wurde ihre Masse $m_l$ ausgewogen. Dann wurden sie in eine wässrige Lösung der in Tabelle 1 nach Art und Konzentration angegebenen Flammschutzmittel gelegt. Das Tauchbad wurde in einer Vakuumkammer auf einen Druck von 50 mbar evakuiert und bei 23 °C für 2 h dort belassen. Schließlich wurde belüftet, die Prüfkörper wurden nach 10 min aus dem Tauchbad genommen, gründlich trocken getupft, 2 h bei 60 °C getrocknet und anschliessend 2 Tage bei 23 °C und 50 % Luftfeuchtigkeit klimatisiert und ihre Masse $m_2$ ausgewogen. Der in Tabelle 2 angegebene Flammschutzmittelgehalt in % entspricht $(m_2-m_l)/m_2$ x 100.

Zum Vergleich wurden entsprechende Prüfkörper in gleicher Weise behandelt. Allerdings wurde anstelle einer Flammschutzmittellösung nur vollentsalztes Wasser eingesetzt (Vergleichsbeispiel VI).

VE-Wasser oder vollentsalztes Wasser im Sinne der vorliegenden Erfindung ist gekennzeichnet, indem es eine Leitfähigkeit von 0,1 bis 10 µS besitzt, wobei der Gehalt an gelösten oder ungelösten Metallionen nicht größer als 1 ppm, bevorzugt nicht größer als 0,5 ppm für Fe, Co, Ni, Mo, r, Cu als individuelle Komponenten ist und nicht größer als 10 ppm, bevorzugt nicht größer als 1 ppm für die Summe der genannten Metalle ist.

**Bestimmung der Flammwidrigkeit**

Die Brandprüfung der Prüfkörper wurde in einem Kleinbrennertest durchgeführt. Dazu wurden die Prüfkörper vertikal eingespannt und an der Unterkante für 30 s mit einer 2 cm langen Zündflamme beflammt. Nach dem Entfernen der Zündflamme wurde beurteilt, ob die Probe von selbst verlöscht, weiterbrennt oder nachglüht. Außerdem wurde die Länge der zerstörten Fläche ("Abbrand") bestimmt. Die Ergebnisse sind in Tabelle 2 aufgelistet.

**Tabelle 2.** Ergebnisse zu den Vergleichsbeispielen V1, V2 und V3 und dem erfindungsgemäßen Beispiel B1.

| **Beispiel** | **V 1** | **V 2** | **V 3** | **B 1** |
|---|---|---|---|---|
| Flammschutzmittelgehalt [%] | 0 | 15 | 15 | 15 |
| Verfärbung des Probekörpers | nein | gelblich | nein | nein |
| selbstverlöschend nach Beflammung | nein | ja | ja | ja |
| Nachglühen | - | nein | nein | nein |
| Abbrand [mm] | 125 | 75 | 45 | 50 |

Auswertung

Die Wirksamkeit des erfindungsgemäß einzusetzenden Tetraalkylbisphosphats als Flammschutzmittel für Holz, hier Diethylenglykol-bis(diethylphosphat), zeigte sich am erfindungsgemäßen Beispiel B1 im Vergleich mit dem Vergleichsbeispiel VI ohne Flammschutzmittel. Der Holzprüfkörper wurde durch die Behandlung mit einem Tetraalkylbisphosphat selbstverlöschend und glühte nicht nach. Die Wirksamkeit ist nahezu so gut wie beim etablierten Flammschutzmittel Diammoniumhydrogenphosphat (Vergleichsbeispiel V3). Gegenüber dem 2-Phosphonobutan-1,2,4-tricarbonsäure-tetranatriumsalz des Standes der Technik (Vergleichsbeispiel V2) zeigt das Tetraalkylbisphosphat einen deutlich geringeren Abbrand, also eine höhere Wirksamkeit, sowie keine Verfärbung.

## B. Bestimmung der Wasseraufnahme

Zur Messung der Wasseraufnahme wurden die mit Flammschutzmittel behandelten Prüfkörper (jeweils 3 Prüfkörper) aus Kiefernholz (125 mm x 40 mm x 4 mm) bis zur Gewichtskonstanz bei 23 °C und 50 % Luftfeuchtigkeit klimatisiert und dann gewogen ($m_1$). Anschließend wurden die Prüfkörper für 7 Tage bei 27 °C und 92 % Luftfeuchtigkeit gelagert. Die Proben wurden gewogen (ni.), optisch geprüft und dann bei 103 °C im Trockenschrank bis zur Gewichtskonstanz getrocknet ($m_t$). Aus den Massen wurde wie folgt die Wasseraufnahme (Mittelwert aus jeweils drei Prüfkörpern) berechnet:

$$U_1 = (m_1 - m_t) / m_t \times 100$$

$$U_g = (m_g - m_t) / m_t \times 100$$

Dabei ist U, der Gleichgewichts-Feuchtigkeitsgehalt unter Normalbedingungen und Ug der Gleichgewichts-Feuchtigkeitsgehalt bei erhöhter Luftfeuchtigkeit ("Tropenbedingungen"). Die Messergebnisse sind in Tabelle 3 zusammengefasst.

**Tabelle 3.** Ergebnisse Wasseraufnahme zu den Vergleichsbeispielen VI, V2 und V3 und dem erfindungsgemäßen Beispiel B1.

| **Beispiel** | **V 1** | **V 2** | **V 3** | **B 1** |
|---|---|---|---|---|
| Flammschutzmittelgehalt [%] | 0 | 15 | 15 | 15 |
| Verfärbung des Probekörpers | nein | gelblich | nein | nein |
| Salzbildung nach Trocknung | nein | nein | ja | nein |
| $U_1$ [%] | 4,9 | 8,0 | 11,3 | 5,1 |
| $U_g$ [%] | 21,4 | 30,1 | 36,7 | 22,6 |

### Auswertung

Die Wasseraufnahme des Holzes sollte durch die Behandlung mit einem Flammschutzmittel möglichst wenig verändert werden. Das erfindungsgemäße Beispiel B1 zeigt, dass mit Tetraalkylbisphosphat behandeltes Holz unter Normalbedingungen nahezu denselben Feuchtigkeitsgehalt wie Holz ohne Flammschutzmittel (Vergleichsbeispiel VI) aufweist. Im Gegensatz dazu zeigen bei diesen Bedingungen die beiden Prüfkörper, die mit Salzen flammwidrig ausgerüstet wurden (Vergleichsbeispiele V2 und V3), einen deutlich erhöhten Feuchtigkeitsgehalt. Beim Übergang zu Bedingungen mit erhöhter Luftfeuchtigkeit ("Tropenbedingungen") zeigt sich bei mit Tetraalkylbisphosphat behandeltem Holz (B1) überraschender Weise nur unwesentlich mehr Feuchtigkeitszunahme als bei unbehandeltem Holz (VI), während die salzartigen Flammschutzmittel (V2 und V3) eine erheblich größere Wasseraufnahme bewirken. Darüber hinaus waren bei den Salzen Verfärbungen (V2) oder die Abscheigung von Salzen an der Oberfläche (V3) zu beobachten, welche beim erfindungsgemäßen Flammschutzmittel nicht beobachtet wurden.

Damit wird deutlich, dass die erfindungsgemäße Behandlung mit Tetraalkylbisphosphaten der Formel (I) zu Holzwerkstoffen mit ausgeprägter Flammwidrigkeit führt. Das natürliche Aussehen der Holzoberfläche wird durch die erfindungsgemäße Behandlung nicht verändert. Die Holzwerkstoffe unterscheiden sich vom Stand der Technik weiterhin durch eine besonders geringe Neigung zur Wasseraufnahme.

### Patentansprüche

1. Flammwidrige Holzwerkstoffe enthaltend als Flammschutzmittel wenigstens ein Tetraalkylbisphosphat der Formel (I)

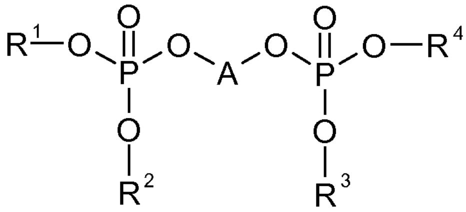

(I),

worin

$R^1$, $R^2$, $R^3$, $R^4$ unabhängig voneinander für einen Rest $C_1$- bis Cs-Alkyl oder $C_1$- bis $C_4$-Alkoxyethyl stehen,
A für einen geradkettigen, verzweigten und/oder cyclischen $C_4$- bis $C_{20}$-Alkylenrest, eine Gruppierung $-CH_2-CH=CH-CH_2-$, eine Gruppierung $-CH_2-C=C-CH_2-$, eine Gruppierung -CHR5-CHR6-(O-CHR7-CHRB)a-, worin a eine Zahl von 1 bis 5 ist, eine Gruppierung -CHR5-CHR6-S(O)$_b$-CHR7-CHR8-, worin b eine Zahl von 0 bis 2 ist, oder eine Gruppierung -(CHR$^5$-CHR$^6$)$_c$-O-R$^9$-O-(CHR$^7$-CHR$^s$)$_d$, worin c und d unabhängig voneinander Zahlen von 1 bis 5 sind steht,
$R^5$, $R^6$, $R^7$, R' unabhängig von einander für H oder Methyl stehen,
$R^9$ für eine Gruppierung $-CH_2-CH=CH-CH_2-$, eine Gruppierung $-CH_2-C=C-CH_2-$, ein 1,2-Phenylenrest, ein 1,3-Phenylenrest, ein 1,4-Phenylenrest, einen Rest der allgemeinen Formel (11),

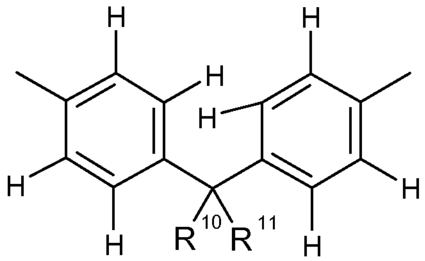

(II),

einen Rest der allgemeinen Formel (III),

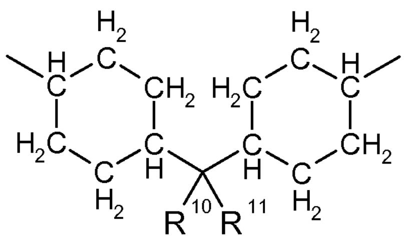

(III),

einen Rest der allgemeinen Formel (IV),

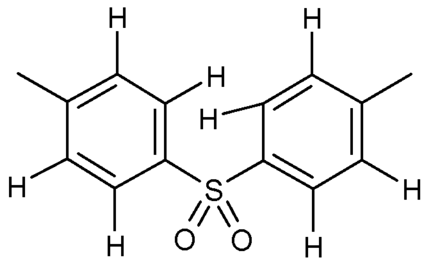
(IV),

oder für einen Rest der Formel -C(=0)-$R^{12}$-C(=O)- steht,
$R^{10}$ und $R^{11}$ unabhängig voneinander für H oder $C_1$- bis $C_4$-Alkyl oder $R^{10}$ und $R^{11}$ zusammen für einen optional alkylsubstituierten Ring mit 4 bis 8 C-Atomen stehen und
$R^{12}$ für einen geradkettigen, verzweigten und/oder cyclischen $C_2$- bis $C_s$-Alkylenrest, einen 1,2-Phenylenrest, einen 1,3-Phenylenrest, oder einen 1,4-Phenylenrest steht.

**2.** Holzwerkstoffe nach Anspruch 1, **dadurch gekennzeichnet, dass** $R^I$, $R^2$, $R^3$ und $R^4$ gleich sind und entweder Ethyl, n-Propyl, iso-Propyl, n-Butyl oder n-Butoxyethyl bedeuten.

**3.** Holzwerkstoffe nach Anspruch 1, **dadurch gekennzeichnet, dass** A für einen geradkettigen $C_4$- bis $C_6$-Alkylenrest, eine Gruppierung der allgemeinen Formel (III), worin $R^{10}$ und $R^{11}$ gleich sind und Methyl bedeuten, oder für eine Gruppierung der Formeln (V), (VI) oder (VII),

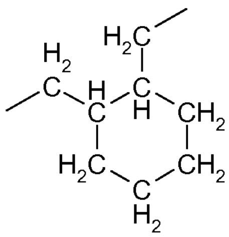
(V)

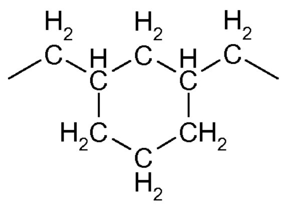
(VI)

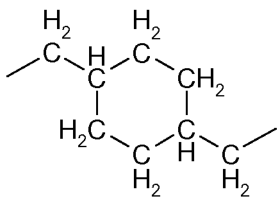
(VII)

oder für eine Gruppierung -$CHR^5$-$CHR^6$-(O-$CHR^7$-$CHR^s$)$_{a-}$, worin a eine Zahl von 1 bis 2 ist und $R^5$, $R^6$, $R^7$und $R^8$ gleich sind und H bedeuten, oder für eine Gruppierung -($CHR^5$-$CHR^6$)$_c$-O-$R^9$-O-($CHR^7$-$CHR^s$)$_r$ steht, worin c und d unabhängig voneinander eine Zahl von 1 bis 2 sind und $R^9$ eine Gruppierung der allgemeinen Formel (II) und $R^{I°}$ und $R^{II}$ gleich sind und Methyl bedeuten.

**4.** Holzwerkstoffe nach Anspruch 1, **dadurch gekennzeichnet, dass** sie als Flammschutzmittel wenigstens ein Tetraalkylbisphosphat ausgewählt aus der Gruppe Diethylenglykol-bis(di-n-butylphosphat), Diethylenglykol-bis(di-n-propylphosphat), Diethylenglykol-bis(diethylphosphat), 1,4-Butandiol-bis(di-n-propylphosphat), oder 1,4-Cyclohexandimethanol-bis(diethylphosphat) enthalten.

**5.** Mittel zur Herstellung von flammwidrigen Holzwerkstoffen, **dadurch gekennzeichnet, dass** diese Mittel wenigstens ein Tetraalkylbisphosphat der Formel (I) enthalten

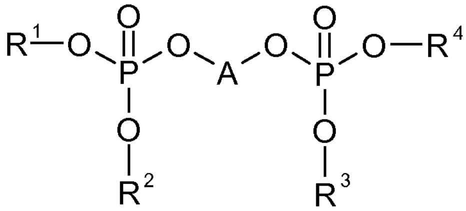

(I),

worin

$R^1$, $R^2$, $R^3$, $R^4$ und A die in Anspruch 1 genannten Bedeutungen haben.

6. Mittel nach Anspruch 5, **dadurch gekennzeichnet, dass** $R^1$, $R^2$, $R^3$ und $R^4$ gleich sind und für einen Rest der Reihe Ethyl, n-Propyl, iso-Propyl, n-Butyl oder n-Butoxyethyl stehen.

7. Mittel nach Anspruch 5, **dadurch gekennzeichnet, dass** A für einen geradkettigen $C_4$- bis $C_6$-Alkylenrest, eine Gruppierung der allgemeinen Formel (III), worin $R^{10}$ und $R^{11}$ gleich sind und Methyl bedeuten, eine Gruppierung der Formeln (V), (VI) oder (VII),

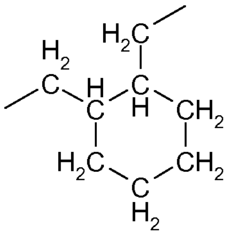

(V)

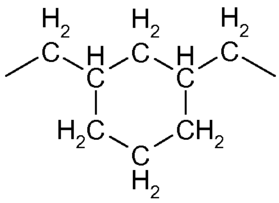

(VI)

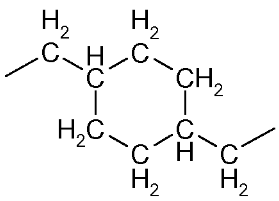

(VII),

eine Gruppierung $-CHR^5-CHR^6-(O-CHR^7-CHR^8)_{a}-$, worin a eine Zahl von 1 bis 2 ist und $R^5$, $R^6$, $R^7$ und $R^8$ gleich sind und H bedeuten, oder eine Gruppierung $-(CHR^5-CHR^6)_c-O-R^9-O-(CHR'-CHR^8)_d-$ ist, worin c und d unabhängig voneinander eine Zahl von 1 bis 2 sind und $R^9$ für eine Gruppierung der allgemeinen Formel (II) steht und $R^{10}$ und $R^{11}$ gleich sind und Methyl bedeuten.

8. Mittel nach Anspruch 5, **dadurch gekennzeichnet, dass** sie wenigstens ein Tetraalkylbisphosphat ausgewählt aus der Gruppe Diethylenglykol-bis(di-n-butylphosphat), Diethylenglykol-bis(di-n-propylphosphat), Diethylenglykol-bis(diethylphosphat), 1,4-Butandiol-bis(di-n-propylphosphat), oder 1,4-Cyclohexandimethanol-bis(diethylphosphat) enthalten.

9. Mittel nach wenigstens einem der Ansprüche 5 bis 8, **dadurch gekennzeichnet, dass** diese Wasser enthalten.

10. Verfahren zur flammwidrigen Ausrüstung von Holzwerkstoffen, **dadurch gekennzeichnet, dass** Holzzuschnitte, Holzpartikel oder Holzhalbzeuge mit Tetraalkylbisphosphaten der Formel (I) behandelt werden

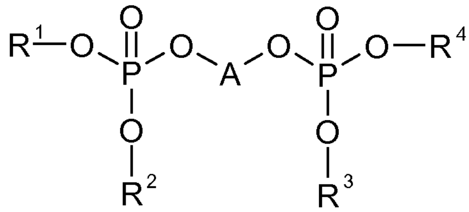

(I),

worin

$R^1$, $R^2$, $R^3$, $R^4$ und A die in Anspruch 1 genannten Bedeutungen haben.

**11.** Verfahren nach Anspruch 10, **dadurch gekennzeichnet, dass** die Behandlung als Kesseldruckimprägnierung durchgeführt wird und dabei Lösungen oder Dispersionen der Tetraalkylbisphosphate in Wasser oder wasserhaltigen Lösungsmitteln eingesetzt werden.

**12.** Verwendung von flammwidrigen Holzwerkstoffen gemäß der Ansprüche 1 bis 4 oder von mit den Mitteln gemäß der Ansprüche 5 bis 9 hergestellten Holzwerkstoffen als Bauholz, als Material zur Herstellung von Inneneinrichtungen, Möbeln oder Innenausstattungen von Transportmitteln, als Ausgangsmaterial für weiter veredelte Holzhalbzeuge und als Füllstoff oder Verstärkungsmaterial in holzhaltigen Kompositmaterialien.

**13.** Verwendung nach Anspruch 12, **dadurch gekennzeichnet, dass** es sich bei den Holzwerkstoffen um Holzpartikel handelt und diese als Füllstoff oder Verstärkungsmaterial in Holz-Kunststoff-Kompositen eingesetzt werden.

Europäisches Patentamt
European Patent Office
Office européen des brevets

# EUROPÄISCHER RECHERCHENBERICHT

Nummer der Anmeldung
EP 10 17 5606

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>Y | EP 1 746 129 A1 (LANXESS DEUTSCHLAND GMBH [DE]) 24. Januar 2007 (2007-01-24)<br>* Absätze [0001] - [0019]; Beispiele *<br>----- | 5-9<br><br>1-4, 10-13 | INV.<br>B27K3/34<br>C09K21/12 |
| Y | US 3 157 613 A (ANDERSON RICHARD M ET AL) 17. November 1964 (1964-11-17)<br>* Spalte 1, Zeile 1 - Spalte 2, Zeile 44 *<br>* Spalte 12, Zeile 24 - Spalte 13, Zeile 5; Beispiel 9 *<br>----- | 1-4, 10-13 | |
| A | Lanxess: "Neues Flammschutzmittel von LANXESS für Holz",<br>,<br>30. April 2009 (2009-04-30), XP002620780,<br>Gefunden im Internet:<br>URL:http://lanxess.com/de/rubber-news/detail/1749/?tx_editfiltersystem_pi1%5Bpointer%5D=21<br>[gefunden am 2011-02-07]<br>* das ganze Dokument *<br>----- | 1-13 | |
| | | | RECHERCHIERTE SACHGEBIETE (IPC) |
| A | US 3 285 774 A (GOLDSTEIN IRVING S ET AL) 15. November 1966 (1966-11-15)<br>* Spalte 1, Zeile 1 - Spalte 3, Zeile 10 *<br>----- | 1-13 | B27K<br>C09K<br>C07F<br>C08K |
| A | EP 1 982 809 A1 (LANXESS DEUTSCHLAND GMBH [DE]) 22. Oktober 2008 (2008-10-22)<br>* Absätze [0001] - [0013], [0017] - [0021] *<br>----- | 1-13 | |

Der vorliegende Recherchenbericht wurde für alle Patentansprüche erstellt

| Recherchenort | Abschlußdatum der Recherche | Prüfer |
|---|---|---|
| Den Haag | 8. Februar 2011 | Martinez Marcos, V |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 10 17 5606

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2011

| Im Recherchenbericht angeführtes Patentdokument | Datum der Veröffentlichung | Mitglied(er) der Patentfamilie | Datum der Veröffentlichung |
|---|---|---|---|
| EP 1746129 A1 | 24-01-2007 | AT 420917 T | 15-01-2009 |
| | | DE 102005034269 A1 | 25-01-2007 |
| | | ES 2318625 T3 | 01-05-2009 |
| | | US 2007021516 A1 | 25-01-2007 |
| US 3157613 A | 17-11-1964 | CH 412784 A | 31-01-1966 |
| | | CH 436704 A | 31-05-1967 |
| | | CH 291063 D | |
| | | DE 1569126 A1 | 26-06-1969 |
| | | NL 289937 A | |
| US 3285774 A | 15-11-1966 | GB 968164 A | 26-08-1964 |
| EP 1982809 A1 | 22-10-2008 | CA 2628648 A1 | 12-10-2008 |
| | | DE 102007017180 A1 | 16-10-2008 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3968276 A
- US 3558596 A
- US 2725311 A
- US 3285774 A
- US 4056480 A
- US 2782128 A


### In der Beschreibung aufgeführte Nicht-Patentliteratur


- **JÜRGEN TROITZSCH.** Plastics Flammability Handbook. Carl Hanser Verlag, 2004
- *Fire and Materials,* 2001, vol. 25 (9), 5-104